# FASCICULE DE BREVET EUROPEEN

(11) **EP 0 649 032 B1**
(45) Date de publication et mention de la délivrance du brevet: **21.01.1998**
(21) Numéro de dépôt: 94402208.6
(22) Date de dépôt: 04.10.1994
(51) Int. Cl.: G01S 3/786, F41G 7/30

(54) **Système de localisation de mobile**
System zur Lokalisierung von mobilen Objekten
System for localisation of mobiles

(30) Priorité: 19.10.1993 FR 9312423
(43) Date de publication de la demande: 19.04.1995
(73) Titulaire: SAT (Société Anonyme de Télécommunications),Société Anonyme, 75783 Paris Cédex 16 (FR)
(72) Inventeur: Midavaine, Thierry, F-75013 Paris (FR); Mouneu, Laurent, F-75013 Paris (FR)
(74) Mandataire: Bloch, Gérard

(56) Documents cités:
- EP-A- 0 425 355
- US-A- 3 974 383
- US-A- 4 216 472
- US-A- 5 147 088

## Description

La présente invention concerne un système de localisation d'un mobile, comportant des moyens émetteurs embarqués à bord du mobile et agencés pour émettre des impulsions lumineuses pseudo-aléatoires en direction d'un poste de localisation comportant des moyens détecteurs sensibles à ces impulsions et agencés pour transmettre, à des moyens d'exploitation, l'image d'une scène contenant le mobile délivrée par un moyen de visée, sous le contrôle de moyens de synchronisation prévus pour être synchronisés avec les impulsions.

L'invention s'applique en particulier, mais non exclusivement, à la localisation de missiles, par exemple tirés du sol ou depuis un hélicoptère vers une cible terrestre.

Un missile, lancé vers la cible à partir d'un poste de tir qui assure aussi la visée de la cible, la localisation et le guidage du missile, doit être localisé par ce poste, afin de comparer sa position par rapport à un axe de visée passant par le poste et la cible et de le guider, s'il ne dispose pas lui-même des moyens nécessaires à son guidage.

Pour cette localisation, le poste comporte un détecteur appartenant à un viseur qui est pointé sur la cible et fournit l'image d'une scène où se trouve l'image de la cible, qu'un serveur du poste de tir amène au centre d'un réticule. D'autre part, le poste de tir dispose d'un localisateur de missile qui est un senseur, harmonisé avec le détecteur de visée, chargé de détecter le missile et de mesurer l'écart angulaire entre l'axe de visée du missile et l'axe déterminé par le viseur de la cible. Afin de faciliter sa localisation, le missile comporte un émetteur optique, appelé balise, émettant vers l'arrière un rayonnement reçu par le détecteur. Eventuellement la position du missile déterminée par le localisateur pourra être incrustée dans l'image délivrée par le viseur.

Une liaison filaire ou hertzienne éventuellement optique de télécommande permet alors au serveur du poste d'envoyer des commandes de manoeuvre du missile afin de faire coïncider son image avec celle de la cible. Ces commandes de pilotage du missile peuvent être élaborées automatiquement à partir des mesures d'écartométrie.

Le problème qui se pose est de distinguer l'image du missile par rapport à celle de la cible ou d'autres objets de la scène. En effet, dans la scène, et en particulier sur la cible, peut être disposée une balise leurre de forte puissance qui risque donc d'être prise en compte à la place du missile et fournir ainsi une fausse image.

Comme cette fausse image ne correspond pas à la position réelle du missile, le serveur du poste de tir, leurré, enverra des commandes erronées de manoeuvre au missile, qui manquera la cible.

Par le document EP-A-0 206 912, on connaît déjà un dispositif de localisation du type indiqué ci-dessus, dans lequel c'est l'instant d'émission de chaque impulsion qui est pseudo-aléatoire, c'est-à-dire que les impulsions sont séparées par des intervalles de temps variables. Ce mode de protection contre les leurres étant connu, la cible peut cependant tenter de détecter les impulsions et d'en déterminer une clé électronique afin d'engendrer des séquences appropriées d'impulsions de contre-mesure ou de saturer le domaine temporel d'apparition des impulsions à l'aide d'une multitude de balises leurres disposées sur la cible ou à proximité.

Il a donc paru souhaitable à la demanderesse de pouvoir utiliser, contre les leurres, une protection qui soit nouvelle et difficile à contourner, et donc pour laquelle les contre-mesures soient inexistantes actuellement et difficiles à établir dans le futur.

A cet effet, l'invention concerne un système du type mentionné ci-dessus, caractérisé par le fait que les moyens émetteurs sont agencés pour moduler pseudo-aléatoirement les durées d'impulsion et les moyens détecteurs sont agencés pour détecter ces durées et les comparer à des durées prédéterminées, et contrôler la transmission de l'image aux moyens d'exploitation en fonction du résultat de cette comparaison.

La mise en oeuvre de contre-mesures est ainsi compliquée par le fait que la cible doit d'abord détecter des séquences pseudo-aléatoires d'impulsions pour tenter de déterminer une clé de génération des séquences. Or, et pour reprendre l'exemple du missile, comme il émet vers le poste de localisation, donc vers l'arrière, la cible ne reçoit que peu d'énergie optique et elle ne peut donc pas déterminer avec précision la position des fronts avant et arrière des impulsions, donc leurs durées, alors que, dans l'art antérieur, où c'était le rythme seul des impulsions qui était modulé, les impulsions avaient la même forme et étaient donc détectées dans les mêmes conditions, avec des retards éventuels voisins, ce qui, par différence des instants de détection, permettait d'en mesurer avec précision l'espacement temporel, donc d'en déterminer le séquencement.

De préférence, les moyens émetteurs sont agencés pour émettre les impulsions à un rythme pseudo-aléatoire.

On dispose ainsi simultanément de deux séquences pseudo-aléatoires, en durées et périodes d'impulsions, ce qui renforce la protection contre les leurres.

Avantageusement, les moyens émetteurs comportent une diode laser dont l'intensité des impulsions lumineuses peut être modulée.

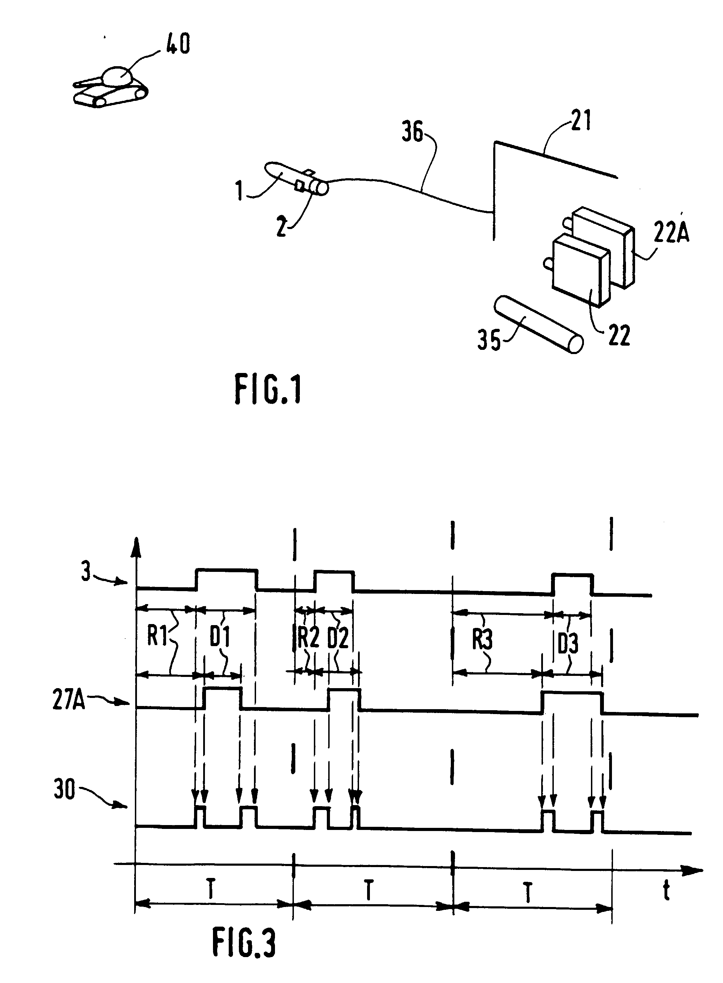

L'invention sera mieux comprise à l'aide de la description suivante de la forme de réalisation préférée du système de localisation de l'invention, en référence au dessin annexé, sur lequel
- la figure 1 est une vue d'ensemble du système de localisation, représentant un poste de tir de visée, de localisation et de guidage, ainsi qu'un missile et une cible,
- la figure 2 est un schéma par blocs du système de la figure 1 et
- la figure 3 est un diagramme temporel illustrant la transmission d'impulsions optiques pseudo-aléatoires.

Le système de localisation de l'invention comporte une balise 2 embarquée à bord d'un mobile, ici un missile 1, et un poste 21 de localisation du missile 1, poste 21, au sol et fixe dans cet exemple, comportant une caméra 22 de localisation de missile, ici une caméra CCD travaillant dans le visible ou proche infrarouge. Le poste 21 assure aussi, dans cet exemple, la visée d'une cible 40 au moyen d'un viseur, ici une caméra 22A de désignation destinée à déterminer la direction de la cible 40.

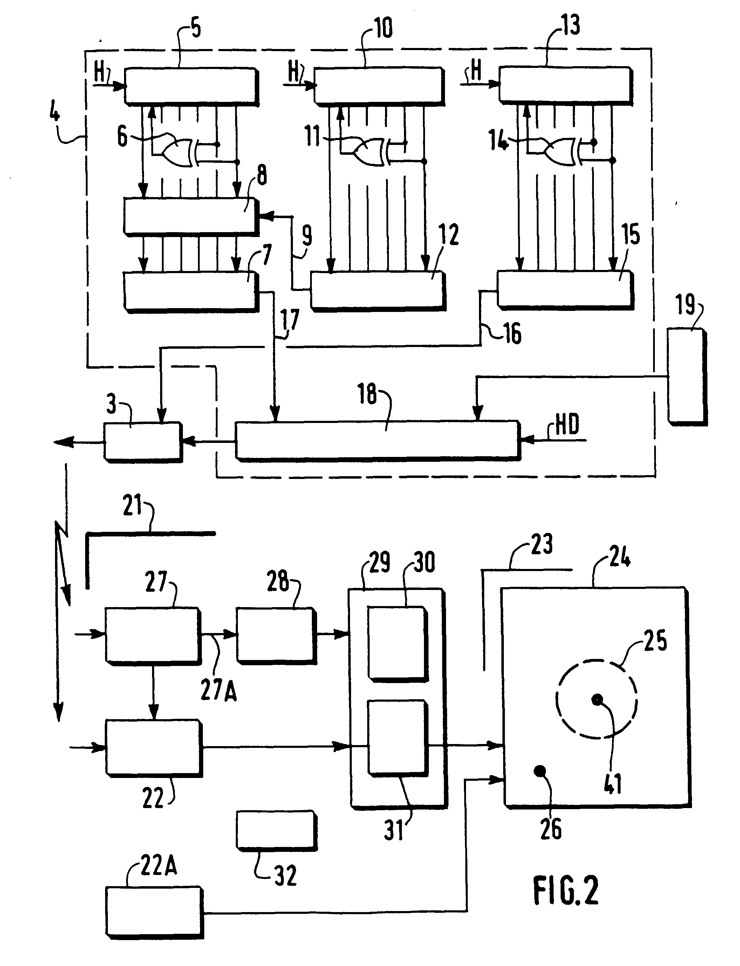

Les caméras 22 et 22A sont montées rotatives sur un support pour qu'un serveur puisse, avec la caméra 22A poursuivre la cible 40 en maintenant son image 41 (figure 2) au centre d'un repère de visée 25 incrusté sur une image 24 de la scène observée, fournie par la caméra 22A à un dispositif d'affichage 23 servant à l'exploitation, ici visuelle, de l'image 24. Le viseur 22A est choisi pour sa capacité à détecter la cible 40, en fonction des conditions opérationnelles et des portées du système. Ainsi il aurait pu être constitué d'une simple lunette de visée, ou d'une caméra travaillant dans le visible et intensifiée ou encore d'une caméra thermique. La caméra de localisation 22 aurait aussi pu simultanément jouer le rôle de caméra de visée 22A.

La caméra de localisation 22 est choisie pour sa capacité à détecter la balise 2 et à disposer d'une commande de période d'acquisition externe. Les caméras 22 et 22A sont harmonisées, solidaire du poste 21.

Le poste de localisation 21 assure aussi, dans cet exemple, le tir du missile 1, au moyen d'un tube lance-missile 35, et le guidage du missile 1, au moyen d'une liaison filaire de télécommande 36 reliant le poste 21 au missile 1.

La caméra 22 comprend un détecteur optique comportant ici une mosaique constituée d'un circuit intégré constituant un dispositif à transfert de charge CCD (Charge Coupled Device) qui engendre de fines bandes jointives de l'image optique de la scène observée qui sont transformées en suites de signaux électriques vidéo permettant de reconstituer, par lignes, dans le circuit d'affichage 23, une image de la scène comportant l'image 26 du missile 1, que l'on prévoit, ici, d'incruster dans l'image 24 engendrée par la caméra de visée 22A.

Un circuit de synchronisation 27, comportant un détecteur optique orienté sensiblement selon l'axe de visée de la caméra 22 et couvrant son champ, et ici solidaire de la caméra 22, est relié en sortie à une entrée de commande d'activation de la caméra 22.

Le circuit de synchronisation 27 comporte une autre sortie par laquelle il émet un signal électrique analogique 27A reproduisant un signal de détection d'impulsions optiques fourni par son détecteur optique. Le signal 27A est transmis à un circuit 28 de mesure d'amplitudes d'impulsions, relié en sortie à un circuit de validation 29 de l'image 26 du missile 1, situé entre la sortie de la caméra de localisation 22 et le circuit d'affichage 23. Le circuit de commande de validation 29 reçoit aussi les impulsions 27A.

Dans le circuit de validation 29, une porte logique 30, de type OU exclusif, reçoit le signal 27A sur une première entrée et, sur une seconde entrée, un train d'impulsions prédéterminées, engendrées localement comme expliqué plus loin, et commande un circuit porte de validation 31 du circuit 29, recevant le signal vidéo issu de la caméra 22 et le transmettant, ou non, au circuit d'affichage 23.

Une base de temps 32 fournit des signaux d'horloge aux circuits ci-dessus.

La balise 2 comporte un émetteur optique 3, ici une diode laser de forte puissance dite "à émission quasi-continue", avec l'électronique de commande voulue, qui peut émettre, vers l'arrière du missile 1, des impulsions lumineuses de puissance crête très élevée pendant des durées relativement importantes. Une diode laser de ce type est commercialisée par la société Spectra Diode Labs sous la référence SDL-3200. L'émission de la diode laser 3 est commandée par un circuit séquenceur 4 déterminant les instants de début et de fin d'impulsion optique. Le circuit séquenceur 4 comporte un premier compteur 5 à grand nombre d'étages en cascade ayant chacun une sortie accessible et une entrée de forçage de l'état de l'étage concerné. Un signal d'horloge H fait avancer le compteur 5. Des portes logiques 6, une seule étant représentée, du type "OU exclusif" dans cet exemple, sont raccordées à des sorties d'étages du compteur 5 et leur signal de sortie est appliqué à l'entrée de forçage d'un autre étage du compteur 5.

Les bits de sortie, ou état, du compteur 5 définissent un nombre pseudo-aléatoire qui est appliqué, à travers un ensemble 8 de portes de transfert commandées par un signal de transfert 9, à un circuit convertisseur 7 fournissant en réponse, à travers un circuit multiplexeur 18, une impulsion de commande 17 à l'émetteur 3, de durée D modulée en fonction, ici proportionnellement, du nombre présent en sortie du compteur 5.

La figure 3 illustre, en fonction du temps t, l'émission de trois impulsions, pour lesquelles des suffixes 1 à 3, représentant des périodes successives, ont été associés aux références des signaux correspondants.

Dans cet exemple, il est prévu un deuxième ensemble d'un compteur 10, de portes OU exclusif 11 et d'un circuit de conversion 12 ayant globalement les mêmes fonctions que le compteur 5, les portes 6 et le circuit de conversion 7. Le circuit de conversion 12 reçoit le signal d'horloge H et fournit le signal de transfert 9 sous forme d'une impulsion retardée d'une durée R par rapport au front montant du signal d'horloge H, cette durée R étant proportionnelle au nombre pseudo-aléatoire issu du compteur 10.

Il est encore ici prévu un troisième ensemble d'un compteur 13, de portes OU exclusif 14 et d'un circuit de conversion 15, recevant aussi le signal d'horloge H et ayant globalement les mêmes fonctions que chacun des deux ensembles ci-dessus, hormis le fait que le circuit de conversion 15 fournit un signal analogique 16 dont l'amplitude est fonction du nombre présent en sortie du compteur 13. Le signal 16 est appliqué à une entrée de réglage de l'émetteur optique 3 et commande l'amplitude, ou intensité, du rayonnement émis.

Dans cet exemple, il est prévu un circuit 19 de transmission de données relié à une entrée du circuit séquenceur 4 aboutissant à une première entrée du circuit multiplexeur 18 recevant, sur une seconde entrée, l'impulsion de commande 17 et relié en sortie à l'émetteur 3. Le circuit multiplexeur 18 est ici commandé par un signal d'horloge HD à période moindre que celle du signal H et synchronisé par celui-ci.

Le fonctionnement du système de localisation va maintenant être expliqué.

Le missile 1 ayant été tiré depuis le tube 35 vers la cible 40, le serveur du poste 21 vise celle-ci avec la caméra 22A pour maintenir son image 41 au centre du repère de visée 25 sur l'image 24.

Dans le missile 1, le circuit séquenceur 4 commande l'émission, par l'émetteur laser 3, de trains d'impulsions lumineuses de durées définies par le premier ensemble 5-7, qui, en l'absence du deuxième ensemble 10-12, seraient émises au rythme de l'horloge H.

Le deuxième ensemble 10-12 module la position temporelle des impulsions émises en retardant, de la durée R pseudo-aléatoire, l'action du circuit convertisseur 7, c'est-à-dire le début du signal 17, par rapport au front montant du signal H.

Il peut être prévu, à condition de mémoriser l'état du compteur 10 dans le circuit de conversion 12, que ce retard R excède la durée de la période T de l'horloge H.

La figure 3 illustre les durées D et les retards R ci-dessus.

Le troisième ensemble 13-15 module de façon pseudo-aléatoire l'amplitude des impulsions lumineuses émises par le laser 3. Cette modulation doit tenir compte de l'adaptation de la puissance d'émission dans le bilan de liaison du missile 1 s'éloignant.

Le circuit 19 de transmission de données prévu dans cet exemple commande l'émetteur 3, ici en alternance avec les ensembles 5-7, 10-12 et 13-15. Le signal d'horloge du multiplexeur 18 détermine le rythme de ces alternances et inhibe le signal de réglage 16 afin que l'émission des données intervienne sous une puissance optique maximale.

L'émission des données est effectuée à toute vitesse de modulation voulue, devant toutefois respecter la puissance moyenne supportée par la diode laser et la bande passante de modulation qu'elle accepte.

Il aurait aussi pu être prévu que les données soient émises simultanément avec l'émission des impulsions pseudo-aléatoires. Dans ce cas, il aurait été choisi un, éventuellement plusieurs, des trois ensembles 5-7,10-12 et il aurait été défini pour chaque état, ou nombre, du compteur (5) considéré, deux nombres spécifiques de cet état. L'un de ces deux nombres spécifiques aurait alors été choisi, pour commander le circuit convertisseur 7 associé, en fonction du niveau 0 ou 1 d'un bit de données à transmettre, issu du circuit de transmission 19, et ainsi reconnaissable en réception dans le poste 21. Ainsi, la durée, par exemple, des impulsions serait modulée simultanément par l'ensemble 5-7 de modulation en largeur et par les données du circuit de transmission 19.

De même, la transmission de données sous forme analogique pourrait être effectuée en substituant au signal de réglage 16 un signal de données analogiques. Ou encore, l'amplitude dans une période d'émission peut être modulée, autorisant ainsi le transfert d'informations de type FSK (modulation par saut de fréquence) ou PSK (modulation par saut de phase), par exemple, cette modulation pouvant être à des fréquences de quelques centaines de kHz à quelques Mégahertz fréquences autorisées par la diode laser 3.

En réception, le circuit de synchronisation 27 commande la prise d'une vue de la scène par la caméra 22 de localisation dès qu'il reçoit le début d'une impulsion lumineuse issue du laser 3. Le circuit de synchronisation 27 transmet aussi, au circuit de mesure 28, avec un retard fixe, l'impulsion analogique 27A de durée égale à la durée de l'impulsion optique reçue et d'amplitude proportionnelle à celle-ci.

Le circuit de mesure 28 transmet, ici sous forme numérique, cette mesure d'amplitude au circuit de validation 29 qui la compare à une valeur d'amplitude, disponible localement à partir d'un ensemble de circuits de génération de séquences pseudo-aléatoires, identique à l'ensemble 13-15 et synchronisé avec lui pour fournir les mêmes trains d'impulsions. De même, la durée D et le retard R sont vérifiés dans le circuit de commande de validation 29 à partir de deux ensembles identiques aux ensembles 5-7 et 10-12 et synchronisés sur eux pour fournir le train d'impulsions attendues. Le retard de transmission, dans les divers circuits, des impulsions reçues est compensé dans le circuit de commande de validation 29.

Un détecteur crête, non représenté, permet d'asservir le gain du circuit de synchronisation 27 pour affranchir le signal 27A de l'affaiblissement progressif des impulsions optiques reçues, dû à l'éloignement du missile 1.

Pour la comparaison en position et durée, les impulsions 27A sont mises en forme logique dans le circuit de validation 29 avant d'être appliquées à la porte OU exclusif 30 recevant aussi le train d'impulsions attendues. La porte OU exclusif 30 est normalement au niveau 0 en sortie et passe au niveau 1 en cas de discordance de ses entrées (figure 3).

La valeur moyenne du signal en sortie de la porte OU exclusif 30 est un signal d'erreur déterminé par intégration sur plusieurs périodes de réception et invalide l'image 24 si cette valeur moyenne dépasse un seuil déterminé. Le circuit porte de validation 31 est alors verrouillé par le signal d'erreur.

Dans cet exemple, l'invalidation a pour effet d'écarter la prise en compte de signaux de la caméra 22 fournissant une image 26 du missile 1 confondue avec celle 41 de la cible, pour ne retenir que les images 24 correspondant à des impulsions 27A associées à un signal d'erreur inférieur au seuil et pour lesquelles le missile 1 et la cible 40 ont, en général, des images 26 et 41 non confondues. L'envoi, par la liaison 36, d'une commande de manoeuvre du missile 1 permet, si besoin est, de lever un doute en vérifiant que les deux images ponctuelles 26 et 41 ne restent pas superposées et sont donc toutes deux vraies. Ceci peut constituer une aide supplémentaire dans la discrimination du missile d'avec des objets composant la scène.

Dans cet exemple, les impulsions optiques sont de grande durée et le circuit de synchronisation 27 fournit plusieurs ordres de commande d'activation à la caméra 22 pendant la durée d'une même impulsion, ce qui permet de rafraîchir plus souvent l'image 24.

Il aurait pu être prévu que le circuit de synchronisation 27 reçoive, pour synchroniser la caméra 22, le train d'impulsions électriques prévues, engendrées par le circuit de validation 29.

Afin d'améliorer le contraste de l'image 26 du missile 1 par rapport au reste de la scène, le circuit de synchronisation 27 commande, en plus, après la fin de chaque impulsion, la prise d'une vue avec un temps d'exposition identique à l'exposition précédente et les images successives sont soustraites deux à deux pour obtenir des images 26 améliorées du missile 1, d'où le paysage fixe et le bruit spatial constant du détecteur est ainsi éliminé.

L'extraction des données transmises par le circuit 19 est effectuée par le circuit de validation 29, qui est synchronisé sur l'horloge HD du multiplexeur 18 et considère ainsi, en temps voulu, les impulsions reçues comme étant des données et bloque alors la porte 30.

On comprendra que l'exploitation des images 26, 41 du missile 1 et de la cible 40 peut être effectuée par des moyens d'exploitation autres que visuels. En particulier, le circuit d'affichage 23 pourrait être remplacé par un calculateur de traitement calculant l'écart angulaire entre l'axe de visée de la cible 40 et l'axe correspondant au missile 1 et émettant, par la liaison 36, des ordres de correction de trajectoire du missile 1 lorsque cet écart dépasse un seuil prédéterminé. Dans ce cas, l'image 24 peut être fournie systématiquement au calculateur de traitement, le signal d'erreur de la porte ou exclusif 30 indiquant si l'image correspondante peut être exploitée.

## Revendications

1. Système de localisation d'un mobile (1) comportant des moyens émetteurs (2) embarqués à bord du mobile (1) et agencés pour émettre des impulsions lumineuses pseudo-aléatoires, un poste de localisation (21) comportant des moyens détecteurs (22) sensibles à ces impulsions et agencés pour transmettre, à des moyens d'exploitation (23), l'image (24) d'une scène contenant le mobile (1) délivrée par un moyen de visée (22A), des moyens de synchronisation (27) prévus pour être synchronisés avec les impulsions et contrôlent la transmission de l'image, caractérisé par le fait que les moyens émetteurs (2) sont agencés (5-7) pour moduler pseudo-aléatoirement les durées d'impulsion et les moyens détecteurs (27, 28, 29) sont agencés pour détecter ces durées et les comparer à des durées prédéterminées et contrôler la transmission de l'image (24) aux moyens d'exploitation (23) en fonction du résultat de cette comparaison.

2. Système selon la revendication 1, dans lequel les moyens émetteurs (2) sont agencés (10-12) pour émettre les impulsions à un rythme pseudo-aléatoire.

3. Système selon l'une des revendications 1 et 2, dans lequel les moyens émetteurs (2) sont agencés pour moduler la durée des impulsions en fonction de données (19) à transmettre et ainsi constituer une liaison descendante du mobile (1) vers le poste de localisation (21).

4. Système selon l'une des revendications 1 à 3, dans lequel les moyens émetteurs (2) comportent une diode laser (3).

5. Système selon la revendication 4, dans lequel il est prévu des moyens (13-15) pour moduler l'intensité des impulsions lumineuses de la diode laser (3).

6. Système selon l'une des revendications 1 à 5, dans lequel les moyens de synchronisation (27) sont agencés pour commander, pendant la durée d'une des impulsions, la fourniture de plusieurs images (24) à des moyens de visualisation (23) des moyens d'exploitation.

## Claims

1. System for localisation of a mobile (1) comprising emitting means (2) on board the mobile (1) and arranged to emit pseudo-random luminous pulses, a localisation station (21) comprising detector means (22) sensitive to these pulses and arranged to transmit, to operating means (23), the image (24) of a scene containing the mobile (2) issued by an aiming means (22A), synchronisation means (27) planned to be synchronised with the pulses, and controlling the transmission of the image, characterised in that the emitting means (2) are arranged (5-7) to modulate, in a pseudo-random manner, the duration of the pulses and the detector means (27, 28, 29) are arranged to detect these durations and compare them with predetermined durations and control the transmission of the image (24) to the operating means (23) depending on the result of this comparison.

2. System according to claim 1, in which the emitting means (2) are arranged (10-12) to emit pulses in a pseudo-random rhythm.

3. System according to one of claims 1 and 2, in which the emitting means (2) are arranged to modulate the duration of the pulses according to data (19) to be transmitted and thus to form a descending connection for the mobile (1) to the localisation station (21).

4. System according to one of claims 1 to 3, in which the emitting means (2) comprise a laser diode (3).

5. System according to claim 4, in which means (13-15) are planned to module the intensity of the luminous pulses of the laser diode (3).

6. System according to one of claims 1 to 5, in which the synchronisation means (27) are arranged to command, for the duration of one of the pulses, the supply of several images (24) to visualisation means (23) of the operating means.

## Patentansprüche

1. System zur Lokalisierung bzw. Bahnverfolgung eines beweglichen Körpers (1), das Sendemittel (2) aufweist, die an Bord des beweglichen Körpers (1) verladen sind und so angeordnet sind, daß sie pseudozufällige Lichtimpulse senden, das einen Lokalisierungs- bzw. Bahnverfolgungsposten (21) aufweist, der Detektormittel (22) aufweist, die für diese Impulse empfindlich sind und die so angeordnet sind, daß sie das Bild (24) einer den beweglichen Körper (1) enthaltenden Szene, das durch ein Visiermittel (22A) bereitgestellt ist an Betriebsmittel (23) übertragen, das Synchronisationsmittel (27) aufweist, die vorgesehen sind, um mit den Impulsen synchronisiert zu werden und die Übertragung des Bildes zu kontrollieren, dadurch gekennzeichnet,
daß die Sendemittel (2) so angeordnet sind (5-7), daß sie die Impulszeitdauer pseudozufällig modulieren, und daß die Dektektormittel (27, 28, 29) so angeordnet sind, daß sie diese Zeitdauer erfassen und sie mit vorbestimmten Zeitdauer vergleichen und die Übertragung des Bildes (24) an die Betriebsmittel (23) in Abhängigkeit des Ergebnisses dieses Vergleichs kontrollieren.

2. System nach Anspruch 1,
wobei die Sendemittel (2) so angeordnet sind (10-12), daß sie die Impulse in einem pseudozufälligen Rhythmus bzw. Takt senden.

3. System nach Anspruch 1 oder 2,
wobei die Sendemittel (2) so angeordnet sind, daß sie die Zeitdauer der Impulse in Abhängigkeit von zu übertragenden Daten (19) modulieren und auf diese Weise eine Abwärtsverbindung des beweglichen Körpers (1) in Richtung auf den Lokalisierungsposten (21) bilden.

4. System nach einem der Ansprüche 1 bis 3,
wobei die Sendemittel (2) einen Diodenlaser (3) aufweisen.

5. System nach Anspruch 4,
wobei Mittel (13-15) vorgesehen sind, um die Intensität der Lichtimpulse des Diodenlasers (3) zu modulieren.

6. System nach einem der Ansprüche 1 bis 5,
wobei die Synchronisationsmittel (27) so angeordnet sind, daß sie während der Zeitdauer eines der Impulse die Lieferung von mehreren Bildern (24) an Anzeigemitteln (23) der Betriebsmittel steuern.
